# EUROPEAN PATENT APPLICATION

(11) **EP 4 708 424 A1**
(43) Date of publication of application: **11.03.2026**
(21) Application number: 25790503.4
(22) Date of filing: 03.01.2025
(51) Int. Cl.: H01M 10/04, B65H 35/00, B65H 20/16, B65H 43/04

(54) **TAPING APPARATUS FOR ELECTRODE SHEET**

(30) Priority: 17.04.2024 KR 20240051566
(71) Applicant: LG Energy Solution, Ltd., Seoul 07335 (KR)
(72) Inventor: KIM, Tae Hyoung, Daejeon 34122 (KR); YOO, Jae Woong, Daejeon 34122 (KR); HWANG, Hee Jae, Daejeon 34122 (KR)
(74) Representative: Goddar, Heinz J.
(86) International application number: PCT/KR2025/000143
(87) International publication number: WO 2025/220842

(57) **Abstract**

The present disclosure relates to a taping device for an electrode sheet, and the taping device for an electrode sheet according to one aspect of the present disclosure may include an electrode sheet supply unit that supplies an electrode sheet including a foil-shaped current collector portion and a plurality of pattern portions arranged along the length direction of the current collector portion on one surface of the current collector portion; a taping unit that forms a tape portion attached to one surface of the current collector portion to overlap at least a part of two neighboring pattern portions among the plurality of pattern portions, respectively; and an electrode sheet recovery unit that recovers an electrode sheet on which the tape portion is formed, wherein the taping unit may include a gripper capable of gripping or releasing a tape and being moved in the width direction of the current collector portion; and a pressurizing block capable of pressurizing the tape toward the current collector portion through an area having a width wider than a spacing between the two pattern portions.

## Description

### TECHNICAL FIELD

### CROSS-REFERENCE TO RELATED APPLICATIONS

The present application claims priority to Korean Patent Application No. 10-2024-0051566 filed on April 17, 2024 in the Republic of Korea, the disclosures of which are incorporated herein by reference.

### TECHNICAL FIELD

The present disclosure relates to a taping device for an electrode sheet, and more specifically, to a taping device for an electrode sheet capable of attaching a tape to an outer surface of an electrode sheet.

### BACKGROUND ART

A secondary battery has been applied to small-sized applications such as mobile devices or laptop computers, but recently, the research direction has been expanded to medium and large-sized applications, and it is widely used in applications requiring high voltage and large capacity in relation to energy storage systems (ESSs) or electric vehicles (EVs).

In general, a secondary battery has a structure in which an electrolyte and an electrode assembly are accommodated inside a case or a housing. The electrode assembly may be manufactured by processing an electrode sheet where active material patterns are formed on the surface of a foil-shaped metal current collector. For example, an electrode assembly may be manufactured by winding the electrode sheet around a predetermined axis, by folding the electrode sheet for each unit length, or by cutting the electrode sheet into units of a uniform size and then stacking them again.

At this time, a taping process may be further performed on the electrode sheet. The taping process is a process of attaching a tape to the outer surface of the current collector. In the above process, the tape is attached to cover the edge part of the active material pattern and a portion of an uncoated part. Here, the uncoated part means a part of the current collector of the electrode sheet that is exposed to the outside without the active material pattern being formed thereon. The tape attached to the current collector may protect the edge of the active material pattern and prevent the occurrence of short circuits between active material patterns of different polarities.

Meanwhile, the conventional taping device for an electrode sheet attached one layer of tape to each edge part of the active material pattern. Specifically, the tape attached to the electrode sheet by the conventional device was attached so that one portion covered one edge part of the active material pattern and the remaining portion covered the uncoated part of the current collector. Since this conventional device was configured to individually attach one layer of tape to each active material pattern, there was a problem of low productivity and efficiency.

To improve the productivity and efficiency of the taping process, a process of attaching a tape with a wider width between neighboring active material patterns may be considered. According to this process, one layer of tape may cover all the edge parts of neighboring active material patterns at once, thereby improving the efficiency and productivity of the taping process.

However, increasing the width of the tape entails a problem of lowering the adhesion quality of the tape. This is because, as the width of the tape increases, the possibility of defects such as the occurrence of wrinkles in the tape or bubble layers between the tape and the electrode sheet increases. Accordingly, there has been an urgent need to develop a taping device for an electrode sheet capable of attaching a tape to an electrode sheet with high quality while improving the efficiency and productivity of the taping process.

### SUMMARY

### TECHNICAL PROBLEM

The present disclosure is designed to solve the problems of the related art, and therefore the present disclosure is directed to providing a taping device for an electrode sheet capable of attaching a tape covering the edge parts of neighboring pattern portion to an electrode sheet with high quality.

The present disclosure is also directed to providing a taping device for an electrode sheet capable of efficiently performing a taping process of an electrode sheet.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a taping device for an electrode sheet including an electrode sheet supply unit that supplies an electrode sheet including a foil-shaped current collector portion and a plurality of pattern portions arranged along the length direction of the current collector portion on one surface of the current collector portion; a taping unit that forms a tape portion attached to one surface of the current collector portion to overlap at least a part of two neighboring pattern portions among the plurality of pattern portions, respectively; and an electrode sheet recovery unit that recovers an electrode sheet on which the tape portion is formed, wherein the taping unit includes a gripper capable of gripping or releasing a tape and being moved in the width direction of the current collector portion; and a pressurizing block capable of pressurizing the tape toward the current collector portion through an area having a width wider than a spacing between the two pattern portions.

At this time, the gripper may include a first gripper portion; a grip plate portion movably coupled to one side of the first gripper portion; and a second gripper portion that is movable in a direction closer to or away from the first gripper portion to grip or release a tape placed between the grip plate portion and the second gripper portion.

At this time, the grip plate portion may be rotatable around an axis parallel to the width direction of the current collector portion.

At this time, in the grip plate portion, a plurality of coupling holes arranged in the length direction of the electrode sheet may be formed, and the gripper may further include a rotating shaft member coupled to any one of the plurality of coupling holes and being a center of rotation of the grip plate portion.

At this time, the pressurizing block may include a pressurizing portion that extends in the width direction of the current collector portion and is movable toward one surface of the current collector portion; and a pressurizing pad portion that is provided on one side of the pressurizing portion and is formed with an embossing pattern on an outer surface facing the one surface of the current collector portion.

At this time, the pressurizing pad portion may have a predetermined width in the length direction of the current collector portion, and the length of the pressurizing pad portion in the width direction may be greater than the spacing between the neighboring pattern portions.

At this time, the pressurizing block may further include a plurality of heating portions that are provided inside the pressurizing portion to heat the pressurizing portion, wherein the heating portion may include a heating wire that extends in the width direction of the current collector portion.

At this time, the plurality of heating portions may be arranged along the transfer direction of the electrode sheet.

At this time, the taping device for an electrode sheet may further include a cleaning unit for removing foreign substances attached to the current collector portion.

At this time, the cleaning unit may be positioned at a front end of the taping unit based on a direction in which the electrode sheet is transferred.

At this time, the cleaning unit may include a cleaning body portion that extends in the width direction of the current collector portion and is formed with a flow path allowing air to enter and exit therein; and a blower portion capable of spraying air from the cleaning body portion to the one surface of the current collector portion.

At this time, the cleaning unit may further include a cleaning roller portion on which the electrode sheet is capable of riding, wherein the cleaning body portion may include a recessed surface that is concavely recessed to correspond to an outer circumferential part of the cleaning roller portion, and the blower portion may be provided on the recessed surface.

At this time, the cleaning unit may further include a suction portion capable of sucking air sprayed from the blower portion and hitting the one surface of the current collector portion.

At this time, the blower portion may be positioned at a rear end of the suction portion based on a direction in which the electrode sheet is transferred.

At this time, the taping device for an electrode sheet may further include a sensor unit capable of obtaining information about relative positions of the pattern portion and the tape portion on the one surface of the current collector portion; and a processor determining whether the electrode sheet is defective based on the information obtained from the sensor unit, wherein the sensor unit may include a sensor portion extending in the width direction of the current collector portion to observe the electrode sheet from one end to the other end in the width direction.

At this time, the sensor unit may further include an illumination portion that irradiates light toward the tape portion to allow the sensor portion to collect light reflected from a material placed on an outer surface of the tape portion.

At this time, the sensor portion may be formed of a vision sensor that photographs the electrode sheet from one end to the other end in the width direction to form image data, wherein the processor may form a plurality of segmented image data obtained by photographing a plurality of segmented areas divided in the width direction of the electrode sheet based on the image data, and may determine whether the tape portion and the pattern portion are overlapped in the segmented areas based on the segmented image data, respectively.

At this time, the taping device for an electrode sheet may further include a transfer unit that transfers an electrode sheet from the electrode sheet supply unit toward the electrode sheet recovery unit; a chamber for providing a work space through which the electrode sheet transferred by the transfer unit passes and in which the taping unit is disposed; and a circulation unit positioned above the electrode sheet transferred by the transfer unit in the work space and blowing air downward.

At this time, the chamber may include a chamber portion having the work space provided therein; and a communication portion provided in the chamber portion to allow the work space to communicate with the outside, wherein the communication portion may be positioned below the electrode sheet transferred by the transfer unit.

At this time, the taping device for an electrode sheet may further include a sensor unit capable of obtaining information about relative positions of the pattern portion and the tape portion on the one surface of the current collector portion; and a processor determining whether the electrode sheet is defective based on the information obtained from the sensor unit, wherein the processor may be positioned outside the chamber.

### ADVANTAGEOUS EFFECTS

According to one aspect of the present disclosure, a gripper of a taping device for an electrode sheet grips a tape having a width wider than the spacing between two neighboring pattern portions and moves in the width direction of the electrode sheet, so that one layer of the tape may be attached to the electrode sheet so as to cover the facing edge parts of the two pattern portions. Accordingly, a taping process for two neighboring pattern portions may be performed at once, thereby improving productivity and efficiency.

According to one aspect of the present disclosure, a pressurizing block of a taping device for an electrode sheet pressurizes the tape toward the electrode sheet with an area having a width wider than the spacing between the two pattern portions, so that the occurrence of wrinkles in the tape and/or bubbles trapped between the tape and the current collector may be minimized. Accordingly, the tape having a wider width may be attached to the electrode sheet with high quality.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a view schematically showing that a taping device for an electrode sheet according an embodiment of the present disclosure tapes an electrode sheet.
FIG. 2 is a perspective view of a portion of an electrode sheet that is the work target of a taping device for an electrode sheet according to an embodiment of the present disclosure, viewed from above.
FIG. 3 is a schematic perspective view of a cleaning unit of a taping device for an electrode sheet according to an embodiment of the present disclosure.
FIG. 4 is a side view schematically showing that a cleaning unit of a taping device for an electrode sheet according to an embodiment of the present disclosure cleans an electrode sheet. At this time, a cleaning body portion of the cleaning unit is shown in cross-section.
FIG. 5 is a perspective view of a gripper of a taping device for an electrode sheet according to an embodiment of the present disclosure, viewed from above.
FIG. 6 is a side view of a gripper of a taping device for an electrode sheet according to an embodiment of the present disclosure. At this time, a rotation support frame is not shown, and a rotating shaft member is shown in cross-section.
FIG. 7 is a view schematically showing that a gripper of a taping device for an electrode sheet according to an embodiment of the present disclosure grips an end side of a tape.
FIG. 8 is a view schematically showing that a gripper of a taping device for an electrode sheet according to an embodiment of the present disclosure moves in the width direction of an electrode sheet in a state of gripping a tape.
FIG. 9 is a perspective view of a pressurizing block of a taping device for an electrode sheet according to an embodiment of the present disclosure, viewed from below.
FIG. 10 is an enlarged view of part U of FIG. 9.
FIG. 11 is a view schematically showing a process where a tape is attached to an electrode sheet by a pressurizing block of a taping device for an electrode sheet according to an embodiment of the present disclosure.
FIG. 12 is a perspective view of a portion of an electrode sheet taped by a taping device for an electrode sheet according to an embodiment of the present disclosure, viewed from above.
FIG. 13 is a side view of a portion of the electrode sheet shown in FIG. 12.
FIG. 14 is a perspective view showing that a sensor unit of a taping device for an electrode sheet according to an embodiment of the present disclosure observes a taping portion of an electrode sheet, viewed from above.
FIG. 15 is a side view showing that a sensor unit of a taping device for an electrode sheet according to an embodiment of the present disclosure observes a taping portion of an electrode sheet, viewed from side.
FIG. 16 is a plan view schematically showing a segmented area identified by a processor of a taping device for an electrode sheet according to an embodiment of the present disclosure on an electrode sheet.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

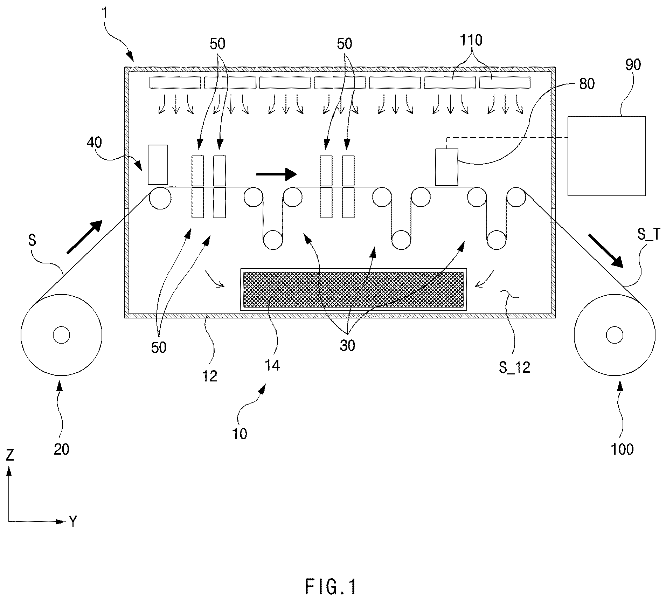

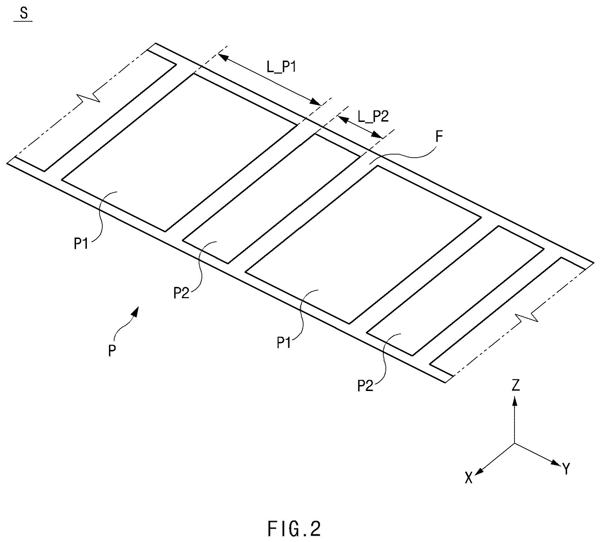

FIG. 1 is a view schematically showing that a taping device for an electrode sheet according an embodiment of the present disclosure tapes an electrode sheet. FIG. 2 is a perspective view of a portion of an electrode sheet that is the work target of a taping device for an electrode sheet according to an embodiment of the present disclosure, viewed from above.

FIG. 1 discloses a taping device for an electrode sheet (hereinafter, referred to as a taping device) 1 according to an embodiment of the present disclosure. The taping device 1 according to an embodiment of the present disclosure may be a device for forming a taped electrode sheet S_T by attaching a tape to an electrode sheet S. Hereinafter, both the non-taped electrode sheet S and the taped electrode sheet S_T are collectively referred to as electrode sheets S, S_T, and are distinguished by the reference numerals that are written together.

Before describing the taping device 1 according to an embodiment of the present disclosure, an electrode sheet S that is the work target of this taping device 1 will be described. FIG. 2 discloses the electrode sheet S that is the work target of this taping device 1. Referring to FIG. 2, the electrode sheet S may include a current collector portion F and a pattern portion P.

In the present disclosure, the current collector portion F may be a portion that constitutes the current collector of the electrode. As shown, the current collector portion F may have a foil shape that extends in one direction and has a predetermined width. The current collector portion F may be made of a conductive metal. For example, the current collector portion F may be made of copper (Cu) or aluminum (Al), but is not limited thereto.

In the present disclosure, the pattern portion P may be a portion that imparts polarity to the electrode. To this end, the pattern portion P may include an electrode active material. For example, the pattern portion P may include lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), and the like, but is not limited thereto.

In the present disclosure, the pattern portion P may be formed on the outer surface of the current collector portion F and may be formed as a layer structure having a predetermined area. At this time, the width of the pattern portion P may be smaller than the width of the current collector portion F.

Therefore, the edge part located in the width direction (Y-axis direction) of the current collector portion F may be exposed to the outside without being covered by the pattern portion P. The pattern portion P may be provided on only one surface of the current collector portion F, or may be provided on both surfaces of the current collector portion F.

At this time, the pattern portion P may be configured in plurality and arranged along the length direction of the current collector portion F. And, the part between neighboring pattern portions P in the current collector portion F may be exposed to the outside without being covered by the pattern portion P.

At this time, at least one of the plurality of pattern portions P may have a different length from the other. As shown, the plurality of pattern portions P may include a first pattern portion P1 having a first length L_P1 and a second pattern portion P2 having a second length L_P2 shorter than the first length L_P1. And, the first pattern portion P1 and the second pattern portion P2 may be disposed alternately along the length direction of the current collector portion F.

Of course, if necessary, the plurality of pattern portions P may all have the same length, or three or more types of pattern portions having different lengths may be arranged in a certain manner.

Hereinafter, components of the taping device 1 according to an embodiment of the present disclosure will be described in detail.

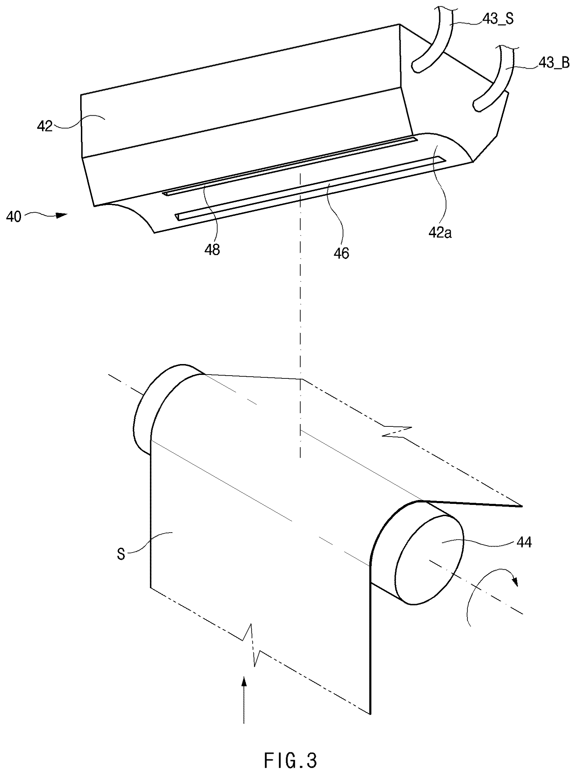

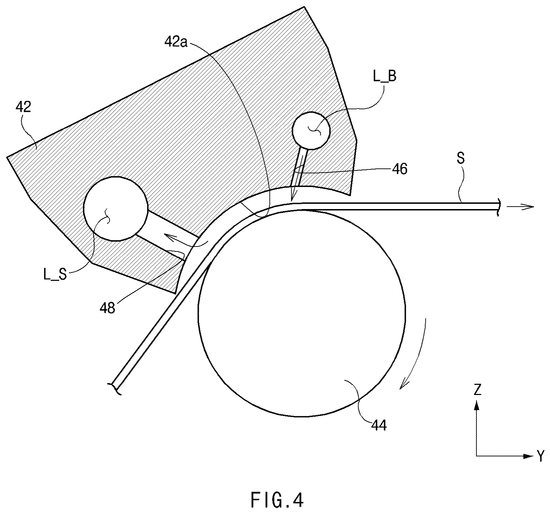

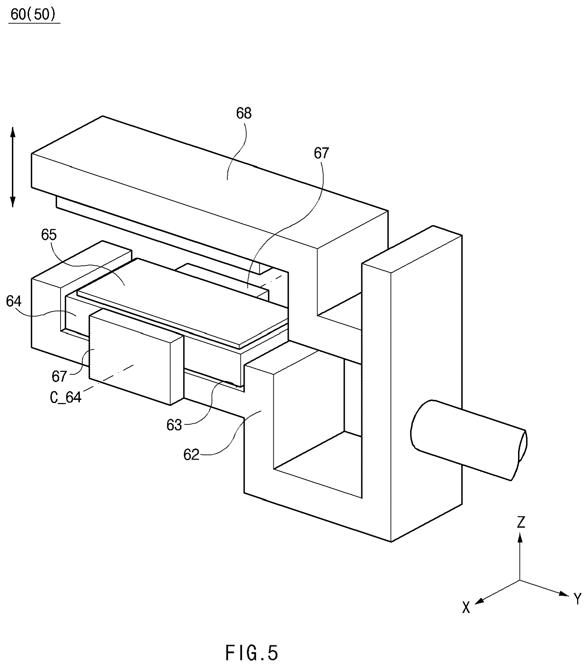

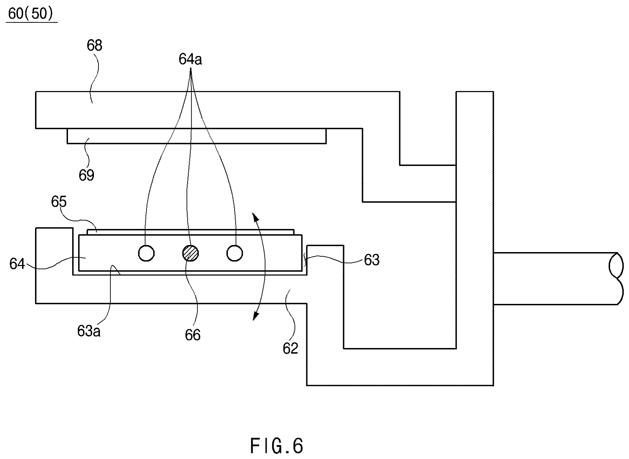

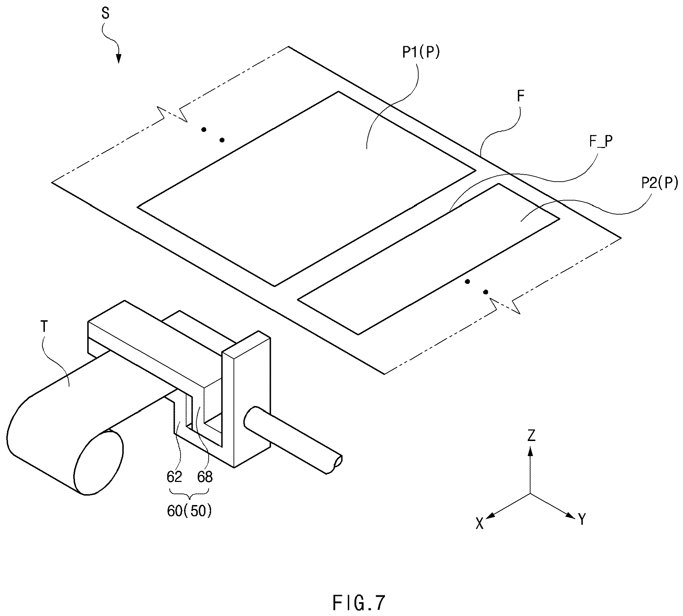

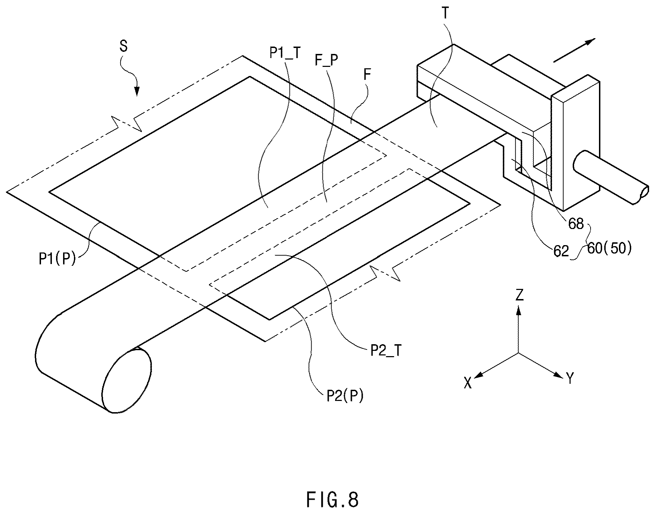

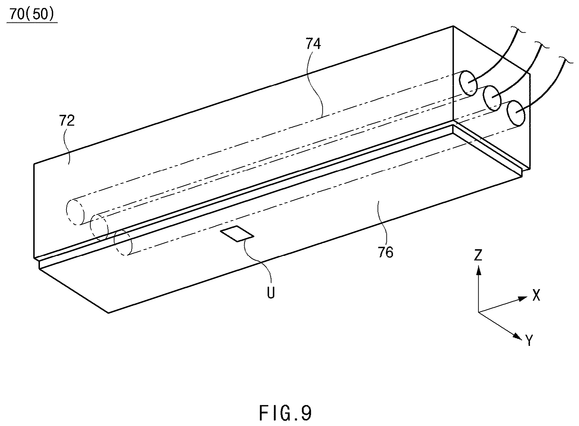

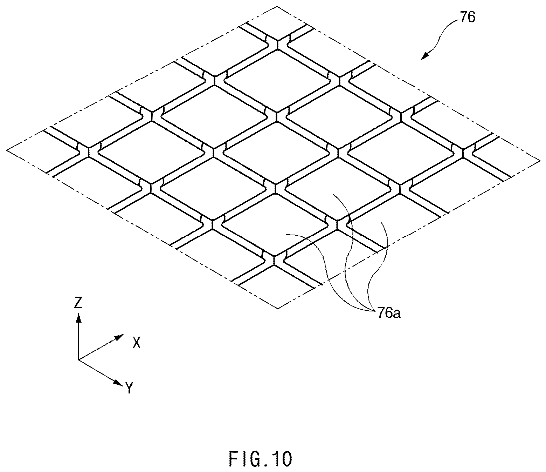

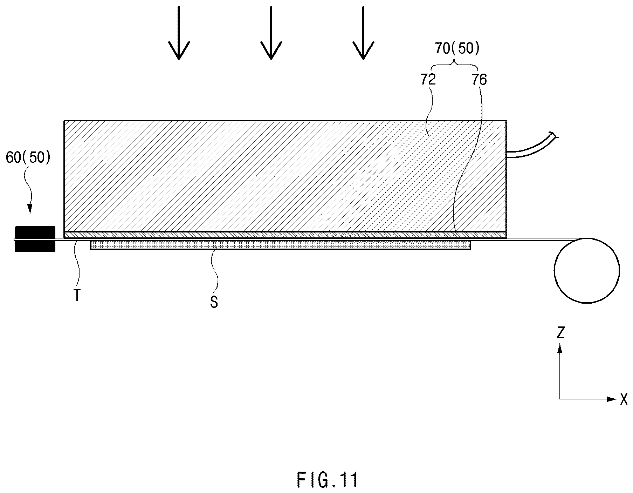

FIG. 3 is a schematic perspective view of a cleaning unit of a taping device for an electrode sheet according to an embodiment of the present disclosure. FIG. 4 is a side view schematically showing that a cleaning unit of a taping device for an electrode sheet according to an embodiment of the present disclosure cleans an electrode sheet. At this time, a cleaning body portion of the cleaning unit is shown in cross-section. FIG. 5 is a perspective view of a gripper of a taping device for an electrode sheet according to an embodiment of the present disclosure, viewed from above. FIG. 6 is a side view of a gripper of a taping device for an electrode sheet according to an embodiment of the present disclosure. At this time, a rotation support frame is not shown, and a rotating shaft member is shown in cross-section. FIG. 7 is a view schematically showing that a gripper of a taping device for an electrode sheet according to an embodiment of the present disclosure grips an end side of a tape. FIG. 8 is a view schematically showing that a gripper of a taping device for an electrode sheet according to an embodiment of the present disclosure moves in the width direction of an electrode sheet in a state of gripping a tape. FIG. 9 is a perspective view of a pressurizing block of a taping device for an electrode sheet according to an embodiment of the present disclosure, viewed from below. FIG. 10 is an enlarged view of part U of FIG. 9. FIG. 11 is a view schematically showing a process where a tape is attached to an electrode sheet by a pressurizing block of a taping device for an electrode sheet according to an embodiment of the present disclosure.

Referring to FIG. 1, the taping device 1 according to an embodiment of the present disclosure may include a chamber 10. The chamber 10 may be configured to provide a work space S_12 in which the taping process of the electrode sheet S is performed. The electrode sheet S may be taped by passing through the work space S_12 from the left (negative direction of the Y-axis) to the right (positive direction of the Y-axis).

In this embodiment, the chamber 10 may include a chamber portion 12. The chamber portion 12 may be provided as a box-shaped structure having a work space S_12 therein. The work space S_12 may be partitioned from the outside by the chamber portion 12.

Through this, the electrode sheet S may be protected from external contamination or impact while the taping process is being performed. This chamber portion 12 may be provided as a structure having various shapes capable of partitioning the outside and the work space S_12.

Meanwhile, the chamber portion 12 may be provided with a through portion or a door portion for allowing the non-taped electrode sheet S to enter the work space S_12 or the taped electrode sheet S_T to exit to the outside.

In this embodiment, the chamber 10 may include a communication portion 14. The communication portion 14 may be configured to be provided in the chamber portion 12 to allow the work space S_12 to communicate with the outside. As an example, the communication portion 14 may be formed of a window formed in the chamber portion 12.

At this time, a mesh-shaped structure may be installed in the window. Through this, it is possible to minimize the entry of external foreign substances into the work space S_12 through the communication portion 14. The structure or shape of this communication portion 14 is not particularly limited as long as it may ventilate the work space S_12 with the outside.

In this embodiment, the communication portion 14 may be positioned below (negative direction of the Z-axis) of the electrode sheet S passing through the work space S_12. To this end, the communication portion 14 may be positioned at the bottom or close to the bottom of the work space S_12. The effect of such a configuration will be described later together with a circulation unit 110.

Referring to FIG. 1 again, the taping device 1 according to an embodiment of the present disclosure may include an electrode sheet supply unit (hereinafter, referred to as a supply unit) 20. The supply unit 20 may be configured to supply the electrode sheet S to a taping unit 50 to be described later.

As shown, the supply unit 20 may be formed of an unwinding device capable of unwinding the electrode sheet S wound in a cylindrical shape. The supply unit 20 may be positioned outside the work space S_12 and may supply the electrode sheet S to the work space S_12. However, the structure or position of the supply unit 20 is not particularly limited. For example, the supply unit 20 may be disposed in the work space S_12.

The taping device 1 according to an embodiment of the present disclosure may include a transfer unit 30. The transfer unit 30 may be configured to transfer the electrode sheets S, S_T. As shown, the transfer unit 30 may be composed of a plurality of transfer rollers. However, the configuration of the transfer unit 30 is not particularly limited as long as it may transfer the electrode sheets S, S_T.

In this embodiment, the transfer unit 30 may transfer the electrode sheets S, S_T in the horizontal direction (Y-axis direction) so that the electrode sheets S, S_T are moved from the supply unit 20 toward the electrode sheet recovery unit 100 to be described later. Accordingly, the electrode sheets S, S_T may pass through the work space S_12 in the horizontal direction (Y-axis direction).

Of course, as shown, some sections of the electrode sheets S, S_T may be configured to be transferred in an inclined direction with respect to the vertical direction (Z-axis direction) or the horizontal direction (Y-axis direction) by the transfer unit 30.

Referring to FIGS. 1, 3, and 4, the taping device 1 according to an embodiment of the present disclosure may include a cleaning unit 40. The cleaning unit 40 may be configured to remove foreign substances by cleaning the outer surface of the electrode sheet S. Here, the foreign substances may be dust, metal pieces, or the like.

In this embodiment, the cleaning unit 40 may be disposed inside the work space S_12. Therefore, the cleaning unit 40 may be protected from external impact or contamination by the chamber 10.

At this time, the cleaning unit 40 may be positioned at a front end of the taping unit 50 to be described later based on the transfer direction of the electrode sheet S in the work space S_12. This may be to improve the process quality by cleaning the outer surface of the electrode sheet S before the electrode sheet S is taped.

To this end, in this embodiment, the cleaning unit 40 may be positioned in the left (negative direction of the Y axis) area of the work space S_12 to be positioned closer to the supply unit 20 than the taping unit 50.

In this embodiment, the cleaning unit 40 may include a cleaning body portion 42. The cleaning body portion 42 may be configured to be the base for the blower portion 46 and the suction portion 48 to be described later.

The cleaning body portion 42 may extend in the width direction (X-axis direction) of the electrode sheet S (or, the current collector portion F). At this time, the length of the cleaning body portion 42 may be longer than the width of the electrode sheet S. As a result, the cleaning body portion 42 may cover the electrode sheet S entirely along the width direction.

In this embodiment, flow paths L_S, L_B through which air may enter and exit may be provided inside the cleaning body portion 42. The flow paths L_S, L_B may include a blower flow path L_B through which air discharged to the blower portion 46 flows, and a suction flow path L_S through which air sucked into the suction portion 48 flows.

At this time, the blower flow path L_B and the suction flow path L_S may extend in the length direction (X-axis direction) of the cleaning body portion 42. Through this, wind may be blown or sucked entirely along the width direction (X-axis direction) of the electrode sheet S.

Meanwhile, in this embodiment, a blower tube 43_B and a suction tube 43_S may be connected to the cleaning body portion 42 in a fluid communication manner. The blower tube 43_B and the suction tube 43_S may be connected to the blower flow path L_B and the suction flow path L_S, respectively. A predetermined pump (not shown) may be connected to the blower tube 43_B or the suction tube 43_S. Through this, air may enter and exit the cleaning body portion 42 at a predetermined pressure.

In this embodiment, the cleaning body portion 42 may be provided with a recessed surface 42a. The recessed surface 42a may be recessed concavely toward the inside of the cleaning body portion 42. This may be to allow the recessed surface 42a to face an outer circumferential part of the cleaning roller portion 44 to be described later as close as possible.

At this time, the recessed surface 42a may correspond to the outer circumferential part of the cleaning roller portion 44 to be described later. Here, when the recessed surface 42a corresponds to the outer circumferential part of the cleaning roller portion 44, it means that the curvature of the recessed surface 42a and the cleaning roller portion 44 are the same or slightly different from each other based on a cross-section perpendicular to the length direction (X-axis direction) of the cleaning roller portion 44.

Through this, a gap between the recessed surface 42a and the outer surface of the cleaning roller portion 44 may be uniformly formed in the circumferential direction of the cleaning roller portion 44. And, the electrode sheet S may enter and exit the gap. In other words, the electrode sheet S may enter and exit between the recessed surface 42a and the cleaning roller portion 44.

Of course, if necessary, the cleaning roller portion 44 may be configured such that the gap in one section and the gap in another section have different sizes in the circumferential direction of the cleaning roller portion 44, or the size of the gap gradually changes in the circumferential direction of the cleaning roller portion 44. The size of the gap will not be particularly limited as long as the electrode sheet S may enter and exit.

Referring to FIGS. 3 and 4 again, the cleaning unit 40 of the taping device according to an embodiment of the present disclosure may include the cleaning roller portion 44. The cleaning roller portion 44 may be configured to transfer the electrode sheet S by pressing it against the recessed surface 42a of the cleaning body portion 42. Accordingly, the blower portion 46 and the suction portion 48 provided on the recessed surface 42a may be positioned as close as possible to the electrode sheet S.

In this embodiment, the cleaning roller portion 44 may extend in the width direction (X-axis direction) of the electrode sheet S. At this time, the length of the cleaning roller portion 44 may be longer than or equal to the width of the electrode sheet S. Through this, the cleaning roller portion 44 may stably press the electrode sheet S against the cleaning body portion 42.

Referring to FIGS. 3 and 4, the cleaning unit 40 of the taping device according to an embodiment of the present disclosure may include a blower portion 46. The blower portion 46 may be configured to clean the outer surface of the electrode sheet S by spraying air toward the electrode sheet S.

As shown, in this embodiment, the blower portion 46 may be provided in the form of an air injection hole formed in the recessed surface 42a. The blower portion 46 may be connected to the blower flow path L_B. Therefore, the high-pressure air introduced into the cleaning body portion 42 through the blower tube 43_B may be sprayed through the blower portion 46.

At this time, the blower portion 46 may extend in the width direction (X-axis direction) of the electrode sheet S from the recessed surface 42a. Through this, the blower portion 46 may spray air entirely onto the electrode sheet S. To perform this function more effectively, the length of the blower portion 46 may be formed to be equal to or longer than the width of the electrode sheet S.

Meanwhile, in this embodiment, the blower portion 46 may be positioned at a further rear end than the suction portion 48 to be described later based on the transfer direction of the electrode sheet S. And, the blower portion 46 may be configured to spray air in a direction facing the transfer direction of the electrode sheet S. This configuration may be achieved by adjusting the direction of the air injection holes forming the blower portion 46.

Here, when the air is sprayed from the blower portion 46 in a direction facing the transfer direction of the electrode sheet S, it may mean that the direction vector of the air sprayed from the blower portion 46 includes a component that faces the direction opposite to the transfer direction of the electrode sheet S.

Accordingly, the air sprayed from the blower portion 46 may remove foreign substances attached (or adsorbed) to the electrode sheet S with stronger force. This is because the air is sprayed in a direction opposite to the transfer direction, which may result in a faster relative speed between the electrode sheet S and the wind.

Meanwhile, in this embodiment, the air injection hole constituting the blower portion 46 may be smaller in size than the air suction hole of the suction portion 48 to be described later. This may be because the injection speed of the blower portion 46 is faster than the suction speed of the suction portion 48.

Meanwhile, in this embodiment, the air injection hole constituting the blower portion 46 is shown in an elongated slit shape. However, the air injection hole may be modified appropriately as necessary. For example, the air injection hole may be provided in the form of a circular hole having a predetermined diameter. And, the circular hole may be configured in plurality and arranged in the length direction (X-axis direction) of the cleaning body portion 42.

Referring to FIGS. 3 and 4 again, the cleaning unit 40 of the taping device according to an embodiment of the present disclosure may include a suction portion 48. The suction portion 48 may be configured to suck foreign substances detached from the electrode sheet S by the blower portion 46 described above. Accordingly, the detached foreign substances may be prevented from being reattached or adsorbed to the electrode sheet S.

In this embodiment, the suction portion 48 may be provided in the form of an air suction hole formed in the recessed surface 42a. The suction portion 48 may be connected to the suction flow path L_S. Therefore, foreign substances and air sucked into the suction portion 48 may be discharged to the outside through the suction tube 43_S via the cleaning body portion 42.

At this time, the suction portion 48 may extend long in the width direction (X-axis direction) of the electrode sheet S from the recessed surface 42a. Through this, the suction portion 48 may suck foreign substances entirely along the width direction of the electrode sheet S. To perform this function more effectively, the length of the suction portion 48 may be formed to be equal to or longer than the width of the electrode sheet S.

Meanwhile, in this embodiment, the suction portion 48 may be positioned at a further front end than the blower portion 46 described above based on the transfer direction of the electrode sheet S. And, the suction portion 48 may be configured to suck air in a direction parallel to the transfer direction of the electrode sheet S. This configuration may be achieved by adjusting the direction of the air suction hole constituting the suction portion 48.

Here, when the air is sucked in a direction parallel to the transfer direction of the electrode sheet S from the suction portion 48, it may mean that the direction vector of the air entering the suction portion 48 includes a component that faces the transfer direction of the electrode sheet S. Accordingly, the suction portion 48 may more effectively recover foreign substances detached from the electrode sheet S.

Meanwhile, in this embodiment, the air suction hole constituting the suction portion 48 may be larger in size than the air injection hole of the blower portion 46 described above. This may be because the suction speed of the suction portion 48 is faster than the injection speed of the blower portion 46, and also because foreign substances detached from the electrode sheet S enter the suction portion 48.

Meanwhile, in this embodiment, the air suction hole constituting the suction portion 48 is shown in an elongated slit shape, but the air suction hole may be appropriately modified as necessary. For example, the air suction hole may be provided in the form of a circular hole having a predetermined diameter. And, the circular hole may be configured in plurality and arranged in the length direction (X-axis direction) of the cleaning body portion 42.

As described above, according to the taping device according to an embodiment of the present disclosure, the cleaning unit 40 may remove foreign substances attached to or absorbed on the electrode sheet S, thereby preventing foreign substances from being interposed or the occurrence of a gap between the tape and the electrode sheet S. Accordingly, a tape having a wide width may be attached to the electrode sheet S with high quality.

Meanwhile, in this embodiment, the cleaning unit 40 is configured to clean the outer surface of the electrode sheet S by using the injection and suction of air. However, the structure or cleaning method of the cleaning unit 40 is not particularly limited as long as it may clean the outer surface of the electrode sheet S. For example, the cleaning unit 40 may include a brush or the like capable of brushing off the electrode sheet S.

Referring to FIG. 1 and FIGS. 5 to 7, the taping device 1 according to an embodiment of the present disclosure may include a taping unit 50. The taping unit 50 may be configured to attach a tape T to the electrode sheet S.

At this time, in this embodiment, the taping unit 50 may be disposed inside the work space S_12. Accordingly, the taping unit 50 may perform a taping operation while being protected from external contamination or impact.

At this time, in this embodiment, the taping unit 50 may be positioned at a rear end of the cleaning unit 40 based on the transfer direction of the electrode sheet S. Accordingly, the taping unit 50 may attach the tape T to the electrode sheet S cleaned by the cleaning unit 40.

Referring to FIGS. 5 to 7, the taping unit 50 of the taping device according to an embodiment of the present disclosure may include a gripper 60. The gripper 60 may be configured to grip or release the tape T.

In this embodiment, the gripper 60 may include a first gripper portion 62. The first gripper portion 62 may be configured to grip one surface of the tape T. As shown, the first gripper portion 62 may grip the lower surface of the tape T.

To this end, the first gripper portion 62 may extend in the width direction (Y-axis direction) of the tape T. At this time, the length of the first gripper portion 62 may be longer than the width of the tape T so that the first gripper portion 62 may stably and entirely grip the tape T in the width direction.

In this embodiment, a grip plate coupling groove 63 may be formed on the upper surface of the first gripper portion 62 toward a second gripper portion 68 to be described later. The grip plate coupling groove 63 may be configured to provide a space in which the grip plate portion 64 to be described later is coupled.

Meanwhile, the gripper 60 of the taping device according to an embodiment of the present disclosure may include a grip plate portion 64. The grip plate portion 64 may be configured to grip the tape T while preventing wrinkles or bends from being formed in the tape T gripped by this gripper 60.

In this embodiment, the grip plate portion 64 may have a flat plate shape extending parallel to the first gripper portion 62. The length of the grip plate portion 64 may be longer than the width of the tape T. Through this, the grip plate portion 64 may stably and entirely grip the tape T.

In this embodiment, the grip plate portion 64 may be movably coupled to an upper part of the first gripper portion 62 toward the second gripper portion 68. The grip plate portion 64 may be disposed in the grip plate portion coupling groove 63 described above.

At this time, in this embodiment, the grip plate portion 64 may be rotatably coupled to the first gripper portion 62. To this end, the grip plate portion 64 may be rotatably coupled to the first gripper portion 62 by a rotating shaft member 66 and a rotation support frame portion 67 to be described later.

In this embodiment, the grip plate portion 64 may be configured to be rotatable around an axis C_64 parallel to the width direction (X-axis direction) of the electrode sheet S (or, the current collector portion F). In other words, the grip plate portion 64 may be configured to be rotatable around the axis C_64 parallel to the length direction (X-axis direction) of the tape T gripped by this gripper 60.

Through this, the tape T having a wide width may be attached to the electrode sheet S with high quality. The lower surface of the tape T is in surface contact with the upper surface of the grip plate portion 64 and is gripped, and this is because the occurrence of wrinkles or bends may be minimized or prevented in the process of gripping the tape T while the grip plate portion 64 rotates.

Specifically, wrinkles or bends of the tape T may be formed when the tape T is gripped by the gripper 60 with an uneven force, or when the tape T is subjected to a locally strong force. However, in this embodiment, the grip plate portion 64 may be rotated to distribute the force so that the grip force is not excessively applied to a local part of the tape T. Through this, the occurrence of wrinkles or bends may be minimized.

Referring to FIG. 5, coupling holes 64a may be formed on an edge side of the grip plate portion 64. The coupling hole 64a may be a hole into which the rotating shaft member 66 that is the center of rotation of the grip plate portion 64 is coupled. These coupling holes 64a may be formed on both sides of the grip plate portion 64 in the width direction (X-axis direction), respectively.

At this time, in this embodiment, the coupling holes 64a are configured in plurality and may be arranged in the length direction of the grip plate portion 64 (or, the length direction of the electrode sheet S) (Y-axis direction). And, the rotating shaft member 66 may be selectively coupled to any one of the plurality of coupling holes 64a.

As a result, the center of rotation of the grip plate portion 64 may be moved in the length direction (Y-axis direction) of the electrode sheet S. For example, when the rotating shaft member 66 is coupled to the coupling hole 63a located at the leftmost based on FIG. 6, the rotational radius of the right part of the grip plate portion 64 may be larger than the rotational radius of the left part.

As such, in this embodiment, the position of the rotational center axis of the grip plate portion 64 may be appropriately adjusted, so that the tape T may be gripped without wrinkles or bends in a wider variety of process environments or conditions.

Meanwhile, in this embodiment, a first grip pad 65 may be provided on the upper surface of the grip plate portion 64 facing the second grip portion 68. The first grip pad 65 may be made of a material having a predetermined elasticity. For example, the first grip pad 65 may be a silicone pad, but is not limited thereto.

This first grip pad 65 may prevent the tape T from being damaged in the process of gripping or releasing the tape T by this gripper 60. At this time, although not shown, predetermined protrusions may be formed on the outer surface of the first grip pad 65. The predetermined protrusions may prevent the tape T from slipping on the outer surface of the grip pad 65.

Referring to FIGS. 5 and 6 again, the gripper 60 of the taping device according to an embodiment of the present disclosure may include the rotating shaft member 66 and the rotation support frame portion 67.

The rotating shaft member 66 may be a member that is the center of rotation of the grip plate portion 64 and rotatably supports it, as described above. To this end, the rotating shaft member 66 may extend in the width direction (X-axis direction) of the electrode sheet S (or, current collector portion F). One end of the rotating shaft member 66 may be coupled to the coupling hole 64a of the grip plate portion 64.

In this embodiment, the rotation support frame portion 67 may extend from the side of the first gripper portion 62 in the thickness direction (Z-axis direction) of the grip plate portion 64. The other end of the rotating shaft member 66 may be rotatably supported on one side of the rotation support frame portion 67 in the extension direction. Through this, the grip plate portion 64 may be rotatably coupled to the first gripper portion 62.

At this time, the rotating shaft member 66 and the rotation support frame portion 67 may be configured in a pair and configured on both sides of the grip plate portion 64 in the width direction (X-axis direction), respectively. Accordingly, the grip plate portion 64 may be supported in a balanced manner and rotated stably.

Referring to FIGS. 5 and 6, the gripper 60 of the taping device according to an embodiment of the present disclosure may include a second gripper portion 68. The second gripper portion 68 may extend parallel to the first gripper portion 62 in the width direction (Y-axis direction) of the tape T.

The second gripper portion 68 may be configured to be movable in a direction closer to or away from the first gripper portion 62 and the grip plate portion 64 coupled thereto. This operation may be implemented by an actuator (not shown) provided in the gripper 60. Through this, the tape T between the grip plate portion 64 and the second gripper portion 68 may be gripped or placed.

At this time, the length of the second gripper portion 68 may be longer than or equal to the width of the tape T. Therefore, the second gripper portion 68 may entirely grip or release the upper surface of the tape T in the width direction.

Meanwhile, in this embodiment, a second grip pad 69 may be provided on the lower surface of the second gripper portion 68 facing the grip plate portion 64. At this time, the second grip pad 69 may be configured identically or similarly to the first grip pad 68 described above.

Referring to FIGS. 7 and 8, the gripper 60 of the taping device according to an embodiment of the present disclosure may be configured to be movable in the width direction (X-axis direction) of the electrode sheet S. This operation may be implemented through a predetermined actuator (not shown).

Therefore, when the gripper 60 passes over the upper side of the electrode sheet S in the width direction (X-axis direction) in a state of gripping the tape T, the tape T wound in a cylindrical shape is unwound and may extend in the width direction (X-axis direction) of the electrode sheet S. The extended tape T may be disposed to overlap the upper surface of the electrode sheet S.

At this time, in this embodiment, the width of the tape T may be wider than the spacing between the first pattern portion P1 and the second pattern portion P2. The width of the tape T may be a length measured in the length direction (Y-axis direction) of the electrode sheet S, which is the direction in which the plurality of pattern portions P are arranged.

Accordingly, the tape T extended by the gripper 60 may overlap the pattern inter-part F_P located between the first pattern portion P1 and the second pattern portion P2 in the current collector portion F. And, the tape T extended by the gripper 60 may also cover the edge parts of the first pattern portion P1 and the second pattern portion P2 facing each other.

Hereinafter, the edge part overlapping the tape T in the first pattern portion P1 is referred to as the first overlapping part P1_T, and the edge part overlapping the tape T in the second pattern portion P2 is referred to as the second overlapping part P2_T.

As described above, the gripper 60 of the taping device according to an embodiment of the present disclosure may stably grip the tape T having a wide width without wrinkles or bends and dispose it to overlap the electrode sheet S. Accordingly, the tape T having a wide width may be attached to the electrode sheet S with high quality.

Referring to FIGS. 8 to 11, the taping unit 50 of the taping device according to an embodiment of the present disclosure may include a pressurizing block 70. The pressurizing block 70 may be configured to pressurize and attach the tape T disposed to overlap the electrode sheet S by the gripper 60 toward the electrode sheet S.

In this embodiment, the pressurizing block 70 may include a pressurizing portion 72 capable of pressing the tape T while moving in the vertical direction (Z-axis direction) to be closer to or away from the electrode sheet S. This operation of the pressurizing portion 72 may be implemented by a predetermined actuator (not shown).

At this time, the pressurizing portion 72 may extend in the width direction (X-axis direction) of the electrode sheet S. The length of the pressurizing portion 72 may be longer than the width of the electrode sheet S. Accordingly, the pressurizing portion 72 may pressurize the electrode sheet S entirely along the width direction (X-axis direction).

In this embodiment, the pressurizing portion 72 may pressurize the tape T with the lower surface facing the electrode sheet S. At this time, the lower surface of the pressurizing portion 72 may have a width wider than the spacing between the first pattern portion P1 and the second pattern portion P2. This configuration may improve the process quality by pressurizing the tape T not only to the pattern inter-part F_P of the current collector portion F but also to the first and second overlapping parts P1_T, P2_T.

The pressurizing block 70 of the taping device according to an embodiment of the present disclosure may include a heating portion 74. The heating portion 74 may be configured to heat the pressurizing portion 72 described above to a predetermined temperature.

As an example, the heating portion 74 may be formed of a heating wire that is penetrated and coupled to the pressurizing portion 72 and heated with electric energy. However, the configuration of the heating portion 74 is not particularly limited as long as it may heat the pressurizing portion 72.

In this embodiment, the heating portion 74 may extend in the length direction (X-axis direction) of the pressurizing portion 72. At this time, the heating portion 74 may be configured in plurality and arranged in the length direction (Y-axis direction) of the electrode sheet S. Accordingly, the pressurizing portion 72 may be uniformly heated as a whole.

As such, in this embodiment, the pressurizing portion 72 heated by the heating portion 74 is configured to pressurize the tape T, so that wrinkles formed in the tape T or bubbles generated between the tape T and the electrode sheet S may be removed.

Referring to FIGS. 8 to 11 again, the pressurizing block 70 of the taping device according to an embodiment of the present disclosure may include a pressurizing pad portion 76. The pressurizing pad portion 76 may be provided on the lower surface of the pressurizing portion 72 facing the electrode sheet S. The pressurizing pad portion 76 may be made of a material having a predetermined elasticity. For example, the pressurizing pad portion 76 may be made of silicone, but is not limited thereto.

In this embodiment, the pressurizing pad portion 76 may extend along the length direction (X-axis direction) of the pressurizing portion 72. At this time, the length of the pressurizing pad portion 76 may be longer than or equal to the width of the electrode sheet S. Through this, the pressurizing pad portion 76 may pressurize the electrode sheet S entirely along the width direction (X-axis direction).

In this embodiment, the pressurizing pad portion 76 may have a width wider than the spacing between the first pattern portion P1 and the second pattern portion P2. Therefore, the pressurizing pad portion 76 may pressurize the tape T not only to the pattern inter-part F_P of the current collector portion F, but also to the first and second overlapping parts P1_T, P2_T.

At this time, an embossing pattern 76a may be formed on the outer surface of the pressurizing pad portion 76. Here, the outer surface of the pressurizing pad portion 76 may be a lower surface that is in direct surface contact with the electrode sheet S and pressurizes it. The embossing pattern 76a may improve the effect of removing wrinkles and bubbles of the pressurizing block 70.

Meanwhile, in this embodiment, the embossing pattern 76a is shown as having square-shaped protrusions repeatedly formed in a grid pattern. However, the shape of the embossing pattern 76a may be appropriately modified as necessary. For example, the embossing pattern 76a may have a dome shape. Alternatively, the shape of the embossing pattern formed in one area of the pressurizing pad portion 76 and the shape of the embossing pattern formed in another area may be configured differently from each other.

As described above, according to an embodiment of the present disclosure, the pressurizing block 70 may pressurize the tape T extended by the gripper 60 toward the electrode sheet S to remove wrinkles and bubbles, so that the tape T may be attached to the electrode sheet S with high quality.

Meanwhile, referring to FIG. 1 again, in this embodiment, the taping unit 50 may be configured in plurality. As shown, the taping unit 50 may be configured in eight units, and each four units may be disposed on the upper side and the lower side of the electrode sheet S, respectively.

As a result, the taping portions T may be formed together at eight locations of the electrode sheet S, so that the efficiency and productivity of the taping process may be improved. The number of such taping units 50 may be appropriately changed in consideration of the size of the work space S_12 or the like.

Hereinafter, the structure of the taped electrode sheet formed by the taping unit of the taping device according to an embodiment of the present disclosure will be briefly described with different drawings.

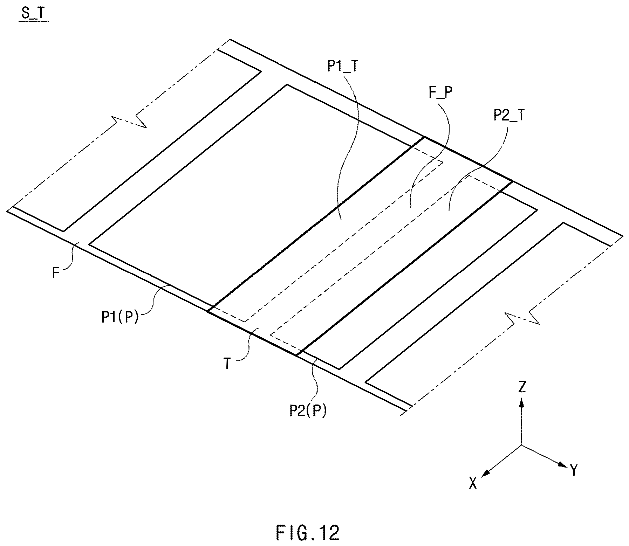

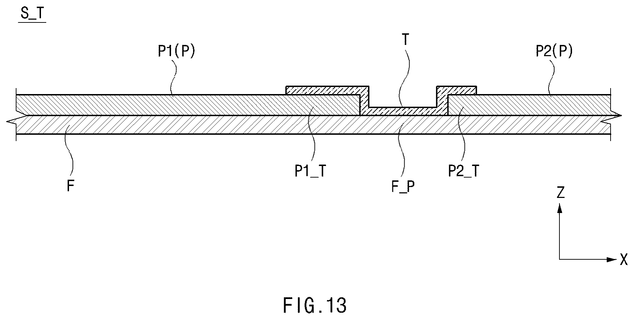

FIG. 12 is a perspective view of a portion of an electrode sheet taped by a taping device for an electrode sheet according to an embodiment of the present disclosure, viewed from above. FIG. 13 is a side view of a portion of the electrode sheet shown in FIG. 12.

Referring to FIGS. 12 and 13, in the present disclosure, the electrode sheet S_T may include a taping portion T. The taping portion T may be formed by attaching a tape to the outer surface of the electrode sheet by a taping unit, as described above.

At this time, in the present disclosure, the taping portion T may have a width wider than the spacing between the first pattern portion P1 and the second pattern portion P2, which are two neighboring pattern portions P. Accordingly, the central part of the taping portion T may cover the pattern inter-part F_P of the current collector portion F, and the edge parts provided on both sides of the taping portion T in the width direction (Y-axis direction) may cover the first overlapping part P1_T of the first pattern portion P1 and the second overlapping part P2_T of the second pattern portion P2, respectively.

This taping portion T may protect the current collector portion F and the pattern portion P from external impact or contamination. In particular, the taping portion T may cover the edge part of the pattern portion P to prevent short circuits with the pattern portion having a different polarity. Through this, the stability of the electrode assembly formed by this electrode sheet S_T may be improved.

Hereinafter, other configurations of the taping device according to an embodiment of the present disclosure will be described with different drawings.

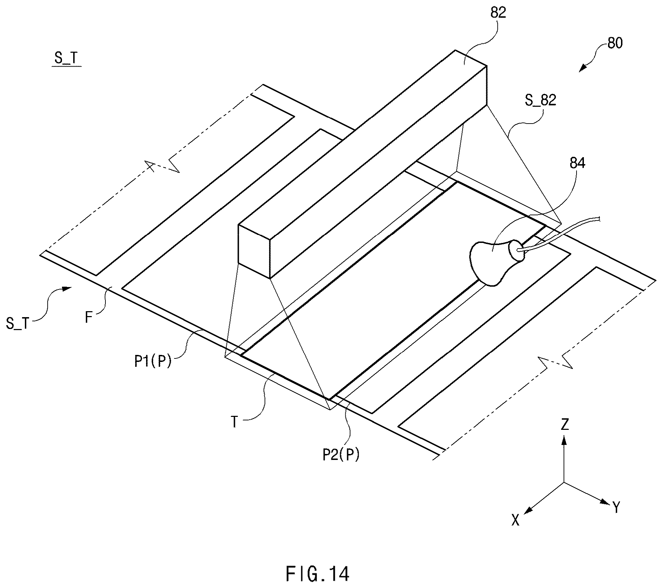

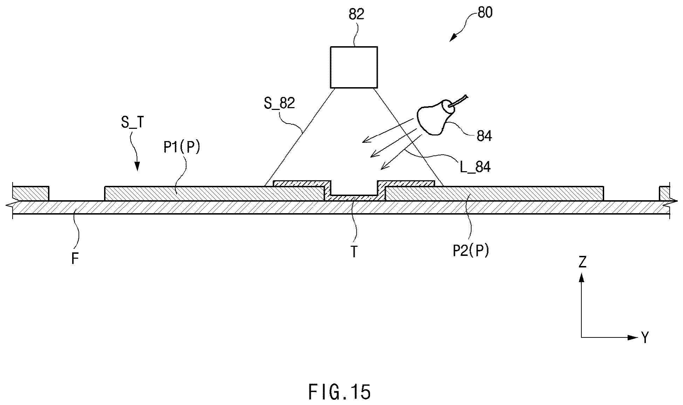

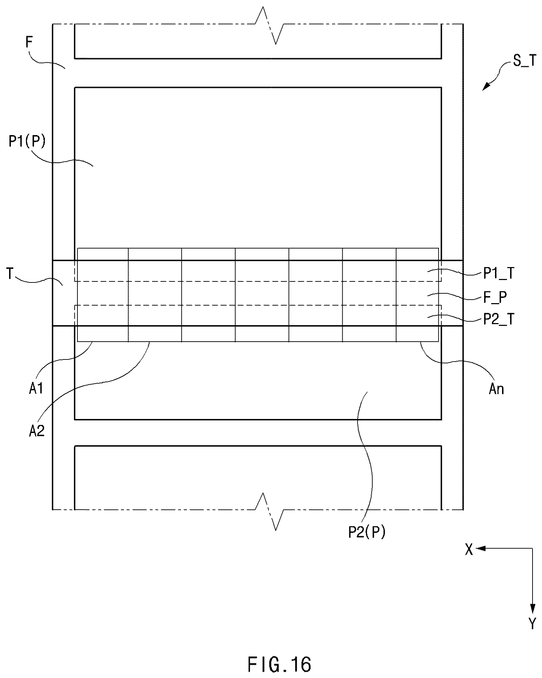

FIG. 14 is a perspective view showing that a sensor unit of a taping device for an electrode sheet according to an embodiment of the present disclosure observes a taping portion of an electrode sheet, viewed from above. FIG. 15 is a side view showing that a sensor unit of a taping device for an electrode sheet according to an embodiment of the present disclosure observes a taping portion of an electrode sheet, viewed from side. FIG. 16 is a plan view schematically showing a segmented area identified by a processor of a taping device for an electrode sheet according to an embodiment of the present disclosure on an electrode sheet.

Referring to FIGS. 1, 14, and 15, the taping device 1 according to an embodiment of the present disclosure may include a sensor unit 80. In this embodiment, the sensor unit 80 may be configured to obtain information about the relative positions of the pattern portion P and the taping portion T in the electrode sheet S_T.

To this end, the sensor unit 80 may be positioned at a rear end of the taping unit 50 based on the transfer direction (Y-axis direction) of the electrode sheet S_T in the work space S_12. In this embodiment, the sensor unit 80 may include a sensor portion 82. The sensor portion 82 may be an image sensor that photographs the upper surface of the electrode sheet S_T to generate image data.

At this time, according to this embodiment, the sensor portion 82 may extend long in the width direction (X-axis direction) of the electrode sheet S_T (or, the current collector portion F) so as to photograph the electrode sheet S_T from one end to the other end at once in the width direction (X-axis direction).

Accordingly, the sensor portion 82 may generate image data obtained by photographing the entire area where the taping portion T is formed in the electrode sheet S_T. In the drawings, the area photographed by the sensor portion 82 is indicated by the reference numeral S_82. This sensor portion 82 may be formed of a bar vision sensor, but is not limited thereto.

Meanwhile, in this embodiment, the sensor unit 80 may include an illumination portion 84. The illumination portion may be configured to irradiate the light L_84 toward the taping portion T of the electrode sheet S_T. The type of the light L_84 is not particularly limited as long as it may be recognized by the sensor portion 82.

The light L_84 irradiated by the illumination portion may be reflected from the electrode sheet S_T and transmitted toward the sensor portion 82 to be photographed by the sensor portion 82. In this way, information about the light L_84 collected by the sensor portion 82 may be used to identify foreign substances attached to or adsorbed on the electrode sheet S_T.

Referring to FIGS. 1 and 16, the taping device 1 according to an embodiment of the present disclosure may include a processor 90. The processor 90 may be configured to determine whether the electrode sheet S_T is defective based on information obtained by the sensor unit 80.

At this time, whether the electrode sheet S_T is defective may be determined based on the relative position between the taping portion T and the pattern portion P. For example, if the taping portion T covers the edge parts of the first and second pattern portions P1, P2 to form the first and second overlapping parts P1_T, P2_T, the electrode sheet S_T may be determined as a good product, and if not, it may be determined as a defective product. This judgment criterion may be appropriately changed as necessary.

At this time, in this embodiment, the processor 90 may divide the image data generated by the sensor portion 82 into segmented image data. At this time, the segmented image data may be image data obtained by photographing a plurality of segmented areas A1 to An (n is a natural number) on the electrode sheet S_T, and the plurality of segmented areas A1 to An may be areas where the area photographed by the sensor portion 82 is divided in the width direction of the electrode sheet S.

And, the processor 90 may individually determine whether the tape portion T and the pattern portion P overlap each other in each segmented area A1 to An based on the plurality of segmented image data. Through this, the taping device 1 according to this embodiment may improve the speed and accuracy of determining whether the electrode sheet S_T is good or defective.

Meanwhile, a step of determining by the processor 90 whether the taping portion T and the pattern portion P are overlapped in each of the segmented areas A1 to An may be as follows. The judgment method to be described later may be appropriately changed as necessary.

Based on FIG. 16, the processor 90 measures a first spacing between the upper edge line of the tape portion T and the upper edge line of the first pattern portion P1, and compares the first spacing with a first reference value.

At this time, the first reference value may be stored in advance in the processor 90. The first reference value may be a design value of the first pattern portion P1 set in the length direction (Y-axis direction) of the electrode sheet S.

Next, the processor 90 determines that the product is good if the first spacing is smaller than the first reference value, and that the product is defective if the first spacing is larger than the first reference value. This is because the first spacing is smaller than the first reference value in a state in which the first pattern portion P is covered by the tape portion T.

Likewise, the processor 90 measures a second spacing between the lower edge line of the tape portion T and the lower edge line of the second pattern portion P2, and compares the second spacing with a second reference value.

At this time, the second reference value may be stored in advance in the processor 90. The second reference value may be a design value of the second pattern portion P2 set in the length direction (Y-axis direction) of the electrode sheet S.

Next, the processor 90 determines that the product is good if the second spacing is smaller than the second reference value, and that the product is defective if the second spacing is larger than the second reference value. This is because the second spacing is smaller than the second reference value in a state in which the second pattern portion P is covered by the tape portion T.

Referring to FIG. 1 again, the taping device 1 according to an embodiment of the present disclosure may include an electrode sheet recovery unit (hereinafter, referred to as a recovery unit) 100. The recovery unit 100 may be configured to recover the electrode sheet S_T taped by the taping unit 50.

As shown, the recovery unit 100 may be formed of a winding device for winding the taped electrode sheet S_T into a cylindrical shape. The recovery unit 100 may be located outside the work space S_12 and may recover the electrode sheet S_T exiting the work space S_12.

As shown, the recovery unit 100 may be positioned on the opposite side of the supply unit 20 with the chamber 10 therebetween. The recovery unit 100 may be disposed at a predetermined distance from the supply unit 20 in the horizontal direction (Y-axis direction). However, the structure or position of the recovery unit 100 is not particularly limited. For example, the recovery unit 100 may be disposed in the work space S_12.

The taping device 1 according to an embodiment of the present disclosure may include a circulation unit 110. The circulation unit 110 may be configured to circulate air in the work space S_12. To this end, the circulation unit 110 may be provided with a fan (not shown) capable of blowing air.

At this time, in this embodiment, the circulation unit 110 may be configured to be positioned above (in the positive direction of the Z-axis) the electrode sheets S, S_T in the work space S_12 and blow air downward (in the negative direction of the Z-axis). Accordingly, foreign substances placed on the outer surface of the electrode sheets S, S_T may be cleaned. Therefore, the process quality of this taping device 1 may be improved.

In this embodiment, the circulation unit 110 and the upper surface of the electrode sheets S, S_T may be disposed to face each other in the vertical direction (Z-axis direction) so that cleaning by the circulation unit 110 may be performed more effectively.

Here, when the circulation unit 110 is disposed to face the electrode sheets S, S_T, it may mean that at least some of the air flow formed by the circulation unit 110 may reach the electrode sheets S, S_T without being blocked by other configurations, thereby detaching foreign substances attached to the outer surface of the electrode sheets S, S_T.

Meanwhile, as described above, in this embodiment, based on the electrode sheets S, S_T, the circulation unit 110 is positioned thereabove (in the positive direction of the Z-axis) and the communication portion 14 is positioned therebelow (in the negative direction of the Z-axis).

Through this configuration, foreign substances detached from the electrode sheets S, S_T may move downward (in the negative direction of the Z-axis) along the air flow generated by the circulation unit 110 and then escape to the outside of the work space S_12 through the communication portion 14. Through this, foreign substances may be prevented from circulating within the work space S_12 and then being attached to the outer surface of the electrode sheets S, S_T again.

At this time, in this embodiment, the circulation unit 110 may be configured in plurality and arranged along the transfer direction (Y-axis direction) of the electrode sheets S, S_T. Through this, cleaning by the circulation unit 110 may be performed throughout the work space S_12.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Taping device for electrode sheet
10: Chamber
20: Electrode sheet supply unit
30: Transfer unit
40: Cleaning unit
50: Taping unit
80: Sensor unit
90: Processor
100: Electrode sheet recovery unit
110: Circulation unit
S: Electrode sheet
S_T: Taped electrode sheet
F: Current collector portion
P: Pattern portion
T: Tape portion

## Claims

1. A taping device for an electrode sheet, comprising:
an electrode sheet supply unit that supplies an electrode sheet comprising a foil-shaped current collector portion and a plurality of pattern portions arranged along the length direction of the current collector portion on one surface of the current collector portion;
a taping unit that forms a tape portion attached to one surface of the current collector portion to overlap at least a part of two neighboring pattern portions among the plurality of pattern portions, respectively; and
an electrode sheet recovery unit that recovers an electrode sheet on which the tape portion is formed,
wherein the taping unit comprises:
a gripper capable of gripping or releasing a tape and being moved in the width direction of the current collector portion; and
a pressurizing block capable of pressurizing the tape toward the current collector portion through an area having a width wider than a spacing between the two pattern portions.

2. The taping device for an electrode sheet according to claim 1,
wherein the gripper comprises:
a first gripper portion;
a grip plate portion movably coupled to one side of the first gripper portion; and
a second gripper portion that is movable in a direction closer to or away from the first gripper portion to grip or release a tape placed between the grip plate portion and the second gripper portion.

3. The taping device for an electrode sheet according to claim 2,
wherein the grip plate portion is rotatable around an axis parallel to the width direction of the current collector portion.

4. The taping device for an electrode sheet according to claim 3,
wherein in the grip plate portion, a plurality of coupling holes arranged in the length direction of the electrode sheet are formed, and
the gripper further comprises a rotating shaft member coupled to any one of the plurality of coupling holes and being a center of rotation of the grip plate portion.

5. The taping device for an electrode sheet according to claim 1,
wherein the pressurizing block comprises:
a pressurizing portion that extends in the width direction of the current collector portion and is movable toward one surface of the current collector portion; and
a pressurizing pad portion that is provided on an outer surface of the pressurizing portion facing the current collector portion,
wherein an embossing pattern is formed on an outer surface of the pressurizing pad portion.

6. The taping device for an electrode sheet according to claim 5,
wherein the pressurizing pad portion has a predetermined width in the length direction of the current collector portion, and
the length of the pressurizing pad portion in the width direction is greater than the spacing between the neighboring pattern portions.

7. The taping device for an electrode sheet according to claim 5,
wherein the pressurizing block further comprises a plurality of heating portions that are provided inside the pressurizing portion to heat the pressurizing portion,
wherein the heating portion comprises a heating wire that extends in the width direction of the current collector portion.

8. The taping device for an electrode sheet according to claim 7,
wherein the plurality of heating portions are arranged along the transfer direction of the electrode sheet.

9. The taping device for an electrode sheet according to claim 1, further comprising:
a cleaning unit for removing foreign substances attached to the current collector portion.

10. The taping device for an electrode sheet according to claim 9,
wherein the cleaning unit is positioned at a front end of the taping unit based on a direction in which the electrode sheet is transferred.

11. The taping device for an electrode sheet according to claim 9,
wherein the cleaning unit comprises:
a cleaning body portion that extends in the width direction of the current collector portion and is formed with a flow path allowing air to enter and exit therein; and
a blower portion capable of spraying air from the cleaning body portion to the one surface of the current collector portion.

12. The taping device for an electrode sheet according to claim 11,
wherein the cleaning unit further comprises a cleaning roller portion on which the electrode sheet is capable of riding,
wherein the cleaning body portion comprises a recessed surface that is concavely recessed to correspond to an outer circumferential part of the cleaning roller portion, and
the blower portion is provided on the recessed surface.

13. The taping device for an electrode sheet according to claim 11,
wherein the cleaning unit further comprises a suction portion capable of sucking air sprayed from the blower portion and hitting the one surface of the current collector portion.

14. The taping device for an electrode sheet according to claim 13,
wherein the blower portion is positioned at a rear end of the suction portion based on a direction in which the electrode sheet is transferred.

15. The taping device for an electrode sheet according to claim 1, further comprising:
a sensor unit capable of obtaining information about relative positions of the pattern portion and the tape portion on the one surface of the current collector portion; and
a processor determining whether the electrode sheet is defective based on the information obtained from the sensor unit,
wherein the sensor unit comprises a sensor portion extending in the width direction of the current collector portion to observe the electrode sheet from one end to the other end in the width direction.

16. The taping device for an electrode sheet according to claim 15,
wherein the sensor unit further comprises an illumination portion that irradiates light toward the tape portion to allow the sensor portion to collect light reflected from a material placed on an outer surface of the tape portion.

17. The taping device for an electrode sheet according to claim 15,
wherein the sensor portion is formed of a vision sensor that photographs the electrode sheet from one end to the other end in the width direction to form image data,
wherein the processor forms a plurality of segmented image data obtained by photographing a plurality of segmented areas divided in the width direction of the electrode sheet based on the image data, and
determines whether the tape portion and the pattern portion are overlapped in the segmented areas based on the segmented image data, respectively.

18. The taping device for an electrode sheet according to claim 1, further comprising:
a transfer unit that transfers an electrode sheet from the electrode sheet supply unit toward the electrode sheet recovery unit;
a chamber for providing a work space through which the electrode sheet transferred by the transfer unit passes and in which the taping unit is disposed; and
a circulation unit positioned above the electrode sheet transferred by the transfer unit in the work space and blowing air downward.

19. The taping device for an electrode sheet according to claim 18,
wherein the chamber comprises:
a chamber portion having the work space provided therein; and
a communication portion provided in the chamber portion to allow the work space to communicate with the outside,
wherein the communication portion is positioned below the electrode sheet transferred by the transfer unit.

20. The taping device for an electrode sheet according to claim 18, further comprising:
a sensor unit capable of obtaining information about relative positions of the pattern portion and the tape portion on the one surface of the current collector portion; and
a processor determining whether the electrode sheet is defective based on the information obtained from the sensor unit,
wherein the processor is positioned outside the chamber.
